(19) Europäisches Patentamt
European Patent Office
Office européen des brevets

(11) **EP 4 403 425 B1**

(12) **EUROPÄISCHE PATENTSCHRIFT**

(45) Veröffentlichungstag und Bekanntmachung des Hinweises auf die Patenterteilung:
**29.10.2025   Patentblatt 2025/44**

(21) Anmeldenummer: **24151096.5**

(22) Anmeldetag: **10.01.2024**

(51) Internationale Patentklassifikation (IPC):
*B60T 13/66* (2006.01)      *B60T 8/17* (2006.01)
*B60T 17/22* (2006.01)      *B60T 8/18* (2006.01)
*B60T 8/32* (2006.01)      *B61H 11/00* (2006.01)

(52) Gemeinsame Patentklassifikation (CPC):
**B61H 11/00; B60T 8/1705; B60T 8/1893; B60T 8/3245; B60T 13/665; B60T 17/228; B60W 10/18**

(54) **VERFAHREN UND VORRICHTUNG ZUR COMPUTERIMPLEMENTIERTEN REGELUNG EINER BREMSANLAGE EINES SCHIENENFAHRZEUGS**

METHOD AND DEVICE FOR THE COMPUTER-IMPLEMENTED REGULATION OF A BRAKING SYSTEM OF A RAIL VEHICLE

PROCÉDÉ ET DISPOSITIF DE RÉGULATION MISE EN UVRE PAR ORDINATEUR D'UN SYSTÈME DE FREINAGE D'UN VÉHICULE FERROVIAIRE

(84) Benannte Vertragsstaaten:
**AL AT BE BG CH CY CZ DK EE ES FI FR GB GR HR HU IE IS IT LI LT LU LV MC ME MK MT NL NO PL PT RO RS SE SI SK SM TR**

(30) Priorität: **20.01.2023   DE 102023101380**

(43) Veröffentlichungstag der Anmeldung:
**24.07.2024   Patentblatt 2024/30**

(73) Patentinhaber: **Deutsches Zentrum für Luft- und Raumfahrt e.V.**
**53227 Bonn (DE)**

(72) Erfinder:
• **Schwarz, Christoph**
  **85386 Eching (DE)**
• **Ewering, Jan-Hendrik**
  **30169 Hannover (DE)**

(74) Vertreter: **Fink Numrich**
**Patentanwälte PartmbB**
**Paul-Gerhardt-Allee 24**
**81245 München (DE)**

(56) Entgegenhaltungen:
EP-B1- 0 189 165      WO-A1-2021/022705
US-A- 5 471 387       US-A1- 2014 343 769

**Beschreibung**

Die vorliegende Erfindung betrifft ein Verfahren und eine Vorrichtung zur computerimplementierten Regelung einer elektrodynamischen oder elektropneumatischen Bremsanlage eines Schienenfahrzeugs mit einem Regelkreis, wobei die Bremsanlage ein, einem Rad des Schienenfahrzeugs zugeordnetes, Stellglied umfasst. Die Erfindung betrifft außerdem ein Computerprogrammprodukt mit Softwarecodeabschnitten zur Ausführung der Schritte des vorgenannten Verfahrens auf einem Computersystem.

Die Erhöhung der Transportkapazität des Schienenverkehrs wird als Schlüssel für nachhaltige Mobilität betrachtet. Eine solche Erhöhung durch betriebliche Verbesserungen zu erreichen, bietet wesentliche Vorteile gegenüber einem kosten- und zeitintensiven Ausbau des Schienennetzes. Ein großes Potential zur Kapazitätssteigerung des bestehenden Schienennetzes liegt in der Verringerung der Zugabstände hintereinanderfahrender Schienenfahrzeuge. Neben einer zuverlässigen und hochgenauen Lokalisierung der Schienenfahrzeuge erfordert die Reduktion des Zugabstands bei gleicher oder höherer Sicherheit idealerweise eine Reduktion der Bremswege im Falle einer Notbremsung, zumindest aber die genaue Einhaltung vorgegebener Bremswege.

Bei Bremsungen mit elektrodynamischen oder elektropneumatischen Bremsanlagen, wie diese beispielsweise bei Straßenbahnen oder herkömmlichen Schienenfahrzeugen zum Einsatz kommen, wird der Bremsweg unter guten Streckenbedingungen hauptsächlich vom Reibverhalten zwischen einem Bremsbelag und einer Bremsscheibe einer Bremsanlage bestimmt. Dabei treten stochastische Streuungen des Bremsweges auf. Unter widrigen Streckenbedingungen, z.B. bei nassem Laub auf den Schienen, hängt der Bremsweg und dessen Streuung dagegen überwiegend von den Reibbedingungen und somit vom erzielbaren Kraftschluss zwischen einem Rad des Schienenfahrzeugs und der Schiene, auf der sich das Schienenfahrzeug bewegt, ab.

Die Erhöhung der Transportkapazität des Schienenverkehrs kann fahrzeugseitig unter anderem durch die folgenden zwei Parameter erreicht werden:
Die Reduktion des Abstands zwischen zwei hintereinander fahrenden Fahrzeugen erfordert es, dass in einem Notbremsfall die betrieblich zulässige Bremsverzögerung bzw. die aufgrund von Umweltbedingungen maximal im Rad-Schiene-Kontakt übertragbare Bremskraft ausgenutzt wird, um den Bremsweg zu minimieren. Ferner ist der spätere Beginn von regulären Betriebsbremsungen, wie z.B. vor Bahnhofseinfahrten, ein Kriterium. Bezogen auf das Bremsvermögen ist es hierfür notwendig, dass bei einer regulären Betriebsbremsung die stochastische Streuung des Bremswegs reduziert wird, um Sicherheitsmargen auf das unbedingt notwendige Maß zu verkleinern und so eine Erhöhung der Zugtaktung zu ermöglichen.

Zu beiden Ansätzen sind verschiedene Lösungsvorschläge bekannt, die - jeweils für sich - auf eine spezielle Bremsregelung für den Notbremsfall und eine spezielle Bremsregelung für die Betriebsbremsung abzielen, wobei im Notbremsfall unter schlechten Bedingungen der sog. Gleitschutz eingreift.

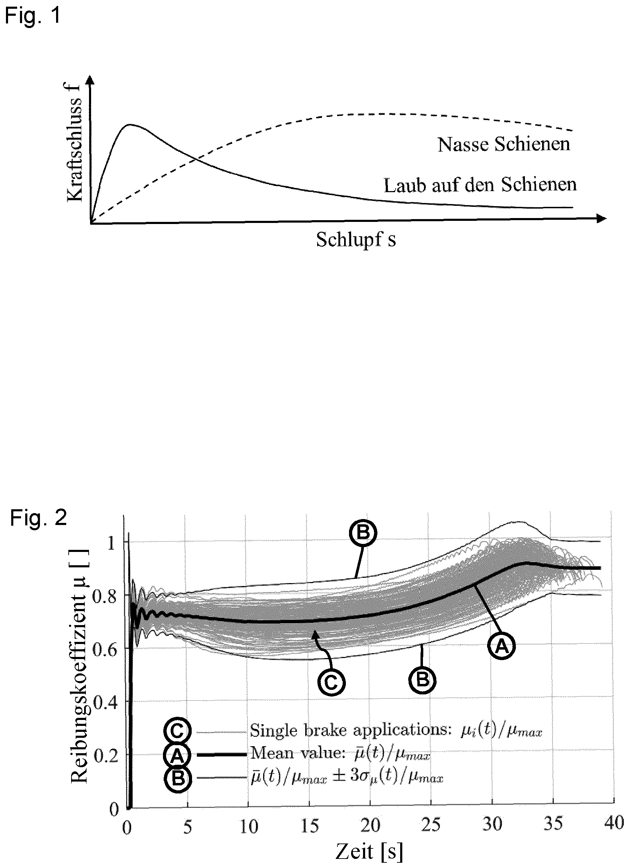

Der Abstand zwischen zwei Schienenfahrzeugen wird maßgeblich durch die Ausführung der Gleitschutzvorrichtung bestimmt. Unter widrigen Streckenbedingungen, z.B. bei nassem Laub auf den Schienen, ist der Bremsweg überwiegend von den Reibbedingungen und somit vom erzielbaren maximalen Kraftschluss zwischen Rad und Schiene abhängig. Bekannte Regelkonzepte sind beispielsweise in der DE 10 2015 116 862 A1 sowie der Veröffentlichung [1] beschrieben. Diese nutzen eine schlupfbasierte Regelung und unterscheiden sich hinsichtlich der konkreten Implementierung. Bei der Verwendung des Schlupfs als Regelgröße für Gleitschutzvorrichtungen ist dabei nicht immer sichergestellt, dass der optimale Kraftschluss erreicht wird, da sich je nach Rad-Schiene-Kontaktbedingungen das Kraftschlussmaximum bei anderen Schlupfwerten einstellen kann, wie dies beispielsweise in Fig. 1 dargestellt ist. Fig. 1 zeigt den Kraftschluss $f$ in Abhängigkeit des Schlupfs $s$. Dabei zeigt die gestrichelte Linie den Zusammenhang zwischen Kraftschluss und Schlupf bei nassen Schienen und die durchgezogene Linie den Zusammenhang von Kraftschluss und Schlupf bei Laub auf den Schienen.

Ein Ansatz, der auf Grundlage von geschätzten Kraftschlussbeiwerten eine Kraftschluss-basierte Bremsregelung ermöglicht, ist in der Veröffentlichung [2] beschrieben. Der in der Veröffentlichung [2] beschriebene Ansatz regelt ein Brems-/Traktionssignal auf eine solche Art, dass der momentan zwischen Rad und Schiene ausgenutzte Kraftschluss gegen den momentan maximal übertragbaren Kraftschluss strebt. Die DE 10 2016 005 248 A1 beschreibt ein weiteres Verfahren zur Optimierung der Kraftschlussausnutzung zwischen Rad und Schiene. Dabei werden Messwerte von Größen eingelesen, die mit einer Sensorik des Schienenfahrzeugs gemessen werden können. Aus den Messwerten werden Modellwerte für weitere Größen mittels eines Modells bestimmt. Aus den Messwerten und den mittels des Modells bestimmen Modellwerten wird dann ein Zustand zwischen Rad und Schiene ermittelt. Die zwischen Rad und Schiene wirkenden Brems- und Antriebskräfte werden unter Berücksichtigung des ermittelten Zustands zwischen Rad und Schiene geregelt.

Für die Betriebsbremsung sind Verfahren bekannt, die auf die Fahrzeuggeschwindigkeit (wie in der DE 10 2019 212 179 A1 beschrieben) oder auf die Beschleunigung (wie in der DE 10 2019 108 447 A1 beschrieben) oder auf den ausgenutzten Kraftschluss zwischen Rad und Schiene regeln, wie in der Veröffentlichung [3] offenbart. Diese Verfahren erlauben es, die Streuung von Bremswegen zu reduzieren, welche unter guten Rad-Schiene-Kontaktbedingungen durch ein stochastisches Verhalten des Reibkoeffizienten zwischen Bremsbelag und Bremsscheibe der Bremsanlage entsteht. Dieses stochastische Verhalten kann beispielhaft der Fig. 2 entnommen werden, die den Reibungskoeffizienten $\mu$ in Abhängigkeit der Zeit t zeigt. Die mit A gekennzeichnete dicke durchgehende Linie zeigt den mittleren Wert ("Mean value") des zeitabhängigen Reibungskoeffizienten $\overline{\mu}(t)$ bezogen auf den maximal möglichen Reibungskoeffizienten $\mu_{max}$. Die mit B gekennzeichneten durchgezogenen Linien ober- und unterhalb der Linie A zeigen eine dreifache Standardabweichung um den Mittelwert: $\overline{\mu}(t)\,/\,\mu_{max}\,\pm\,3\sigma_\mu(t)\,/\,\mu_{max}$. Die mit C gekennzeichnete Kurvenschar zeigt einzelne Bremsvorgänge ("Single brake applications") und die dabei auftretenden zeitabhängigen Reibungskoeffizienten $\mu_i(t)\,/\,\mu_{max}$.

Für die beiden oben beschriebenen Wege zur Kapazitätssteigerung, d.h. der Verkürzung des Bremswegs unter schlechten Rad-Schiene-Kontaktbedingungen, sind grundsätzlich geeignete Regelkonzepte vorhanden. Aufgrund der getrennten Betrachtung ist derzeit eine Logik vorzusehen, die die Entscheidung trifft, ob eine Notbremsregelung oder eine Betriebsbremsregelung aktiv ist. Hierfür ist es erforderlich, vorab einen Umschaltzeitpunkt zwischen den beiden Regelungen festzulegen. Der Umschaltzeitpunkt muss dabei verschiedene mögliche Umweltbedingungen berücksichtigen, um einen optimalen Bremsweg realisieren zu können. Weiterhin muss sichergestellt werden, dass es zu keinen fehlerhaften Umschaltpunkten aufgrund von Störungen, Fehlfunktionen oder sonstigen technischen Problemen kommt, da diese zu ungewollten Änderungen des Bremswegs führen können.

Ein Verfahren zur Überwachung eines Bremssystems eines Schienenfahrzeugs wird in dem Dokument US 2014/343769 A1 vorgeschlagen.

Es ist Aufgabe der vorliegenden Erfindung, ein Verfahren und eine Vorrichtung zur Regelung einer Bremsanlage eines Schienenfahrzeugs mit einem Regelkreis anzugeben, welche funktional verbessert sind.

Diese Aufgaben werden gelöst durch ein Verfahren gemäß den Merkmalen des Anspruchs 1, ein Computerprogrammprodukt gemäß den Merkmalen des Anspruchs 13 sowie eine Vorrichtung gemäß den Merkmalen des Anspruchs 14. Vorteilhafte Ausgestaltungen ergeben sich aus den abhängigen Ansprüchen.

Es wird ein Verfahren zur computerimplementierten Regelung einer elektrodynamischen oder elektropneumatischen Bremsanlage eines Schienenfahrzeugs mit einem Regelkreis vorgeschlagen, wobei die Bremsanlage ein, zumindest einem Rad des Schienenfahrzeugs zugeordnetes, Stellglied umfasst. Der Regelkreis verarbeitet im Betrieb des Schienenfahrzeugs einen angeforderten Soll-Kraftschluss zu einem aktuellen Zeitschritt k zwischen dem Rad und einer Schiene, auf der sich das Schienenfahrzeug bewegt. Der Regelkreis gibt an einem Ausgang eine zeitdiskrete Sollbremsgröße zu einem darauffolgenden Zeitschritt k + 1 aus, die der Bremsanlage als Eingangsgröße zugeführt wird. Zu jedem Zeitschritt k von einem oder mehreren Zeitschritten während des Betriebs des Schienenfahrzeugs wird aus dem angeforderten Soll-Kraftschluss, einem aktuell ausgenutzten Ist-Kraftschluss und dessen Ableitung, sowie einer Ableitung eines aktuellen Schlupfs eine Bremskraftänderung ermittelt, die der aktuellen Bremsgröße überlagert wird.

Das Verfahren ermöglicht eine ganzheitliche Betrachtung der Bremssteuerung. So kann auf die getrennte Auslegung der eingangs beschriebenen Notbremsregelung und Betriebsbremsregelung sowie die Definition von geeigneten Umschaltpunkten zwischen diesen beiden Regelungen vollständig entfallen. Das Verfahren kann auf unterschiedliche äußere Bedingungen derart reagieren, dass ohne vorab definierte Schlupf- , Beschleunigungs- oder andere Grenzwerte eine durchgängige Regelung erfolgt, die unter schlechten Rad-Schiene-Kontaktbedingungen den Kraftschluss maximiert, um ungewollte Bremswegverlängerungen zu minimieren und die bei ausreichenden Rad-Schiene-Kontaktbedingungen den Kraftschluss konstant hält, um stochastische Einflüsse auf den Bremsweg zu reduzieren und dessen Wiederholbarkeit zu verbessern.

Gemäß einer zweckmäßigen Ausgestaltung wird ermittelt, ob der Schlupf zum aktuellen Zeitschritt k größer oder kleiner als ein dem optimalen Kraftschluss entsprechender optimaler Schlupf ist. Dies wird dadurch realisiert, dass ein Wert einer ersten Vorzeichenfunktion des Produkts aus der zeitlichen Ableitung des aktuell ausgenutzten Ist-Kraftschlusses und der zeitlichen Ableitung des aktuellen Schlupfs ermittelt wird, wobei ein erster Wert der ersten Vorzeichenfunktion verarbeitet wird, wenn der Schlupf zum aktuellen Zeitschritt kleiner als der optimale Schlupf ist, und wobei ein zweiter Wert der ersten Vorzeichenfunktion verarbeitet wird, wenn der Schlupf zum aktuellen Zeitschritt k größer als der optimale Schlupf ist. Mit anderen Worten wird ein Wert der Signumfunktion $sgn(\dot{f}_{ist,k} * \dot{s}_k)$, die die erste Vorzeichenfunktion repräsentiert, verarbeitet, wobei der erste Wert z.B. "1" und der zweite Wert z.B. "-1" beträgt.

Gemäß dieser Ausgestaltung wird somit ermittelt, ob sich der aktuell ausgenutzte Kraftschlusswert auf der von der aktuellen Umgebungsbedingungen abhängigen Kraftschluss-Schlupf-Kurve links oder rechts vom optimalen Schlupfwert befindet.

Gemäß einer weiteren zweckmäßigen Ausgestaltung wird ermittelt, ob der aktuell ausgenutzte Ist-Kraftschluss zum aktuellen Zeitschritt k größer oder kleiner als der angeforderte Soll-Kraftschluss ist. Hierzu wird ein Wert einer zweiten Vorzeichenfunktion aus der Differenz des angeforderten Soll-Kraftschlusses und dem aktuell ausgenutzten Ist-Kraftschluss zum aktuellen Zeitschritt $k$ ermittelt, wobei ein erster Wert der zweiten Vorzeichenfunktion verarbeitet wird, wenn der aktuell ausgenutzte Ist-Kraftschluss zum aktuellen Zeitschritt $k$ kleiner als der angeforderte Soll-Kraftschluss ist, und wobei ein zweiter Wert der zweiten Vorzeichenfunktion verarbeitet wird, wenn der aktuell ausgenutzte Ist-Kraftschluss zum aktuellen Zeitschritt k größer als der angeforderte Soll-Kraftschluss ist.

Auch hier wird somit eine Signumfunktion als zweite Vorzeichenfunktion verwendet, die in mathematischer

**3**

Schreibweise lautet: $sgn(f_{soll,k} - f_{ist,k})$. Der erste Wert der zweiten Vorzeichenfunktion beträgt z.B. "1" und der zweite Wert der zweiten Vorzeichenfunktion beträgt z.B. "-1".

Während bei dem vorgenannten Ausführungsbeispiel ein singulärer Wert als Soll-Kraftschluss verarbeitet wurde, kann zweckmäßig vorgesehen sein, dass der Soll-Kraftschluss in einem vorgegebenen Bereich mit einem unteren Kraftschlusswert und einem oberen Kraftschlusswert liegt. Hierdurch wird eine Regelung nach Art einer Hysterese ermöglicht, welche ein "hektisches" Umschalten zwischen unterschiedlichen Bremsanforderungen (Bremskraftänderungen) verhindert.

In diesem Fall ist es zweckmäßig, wenn ermittelt wird, ob der aktuell ausgenutzte Ist-Kraftschluss zum aktuellen Zeitschritt $k$ größer oder kleiner als der untere Kraftschlusswert und der obere Kraftschlusswert ist. Es wird mit anderen Worten das oben beschriebene Vorgehen in Bezug auf den unteren Kraftschlusswert und den oberen Kraftschlusswert wiederholt, um festzustellen, ob der aktuell ausgenutzte Ist-Kraftschluss kleiner als der untere Kraftschlusswert, zwischen dem unteren und dem oberen Kraftschlusswert liegt oder größer als der obere Kraftschlusswert ist.

Zu diesem Zweck wird ein Wert einer dritten Vorzeichenfunktion aus der Differenz des oberen Kraftschlusswerts und dem aktuell ausgenutzten Ist-Kraftschluss zum aktuellen Zeitschritt $k$ ermittelt, wobei ein erster Wert der dritten Vorzeichenfunktion verarbeitet wird, wenn der aktuell ausgenutzte Ist-Kraftschluss zum aktuellen Zeitschritt $k$ kleiner als der obere Kraftschlusswert ist, und wobei ein zweiter Wert der dritten Vorzeichenfunktion verarbeitet wird, wenn der aktuell ausgenutzte Ist-Kraftschluss zum aktuellen Zeitschritt $k$ größer als der obere Kraftschlusswert ist.

In entsprechender Weise wird in Bezug auf den unteren Kraftschlusswert ein Wert einer vierten Vorzeichenfunktion aus der Differenz des unteren Kraftschlusswerts und dem aktuell ausgenutzten Ist-Kraftschluss zum aktuellen Zeitschritt k ermittelt, wobei ein erster Wert der vierten Vorzeichenfunktion verarbeitet wird, wenn der aktuell ausgenutzte Ist-Kraftschluss zum aktuellen Zeitschritt $k$ kleiner als der untere Kraftschlusswert ist, und wobei ein zweiter Wert der vierten Vorzeichenfunktion verarbeitet wird, wenn der aktuell ausgenutzte Ist-Kraftschluss zum aktuellen Zeitschritt k größer als der untere Kraftschlusswert ist.

Beispielsweise kann bei einem Unterschreiten des unteren bzw. oberen Kraftschlusswerts die vierte bzw. dritte Vorzeichenfunktion als ersten Wert eine "1" und beim Überschreiten des jeweiligen oberen und unteren Kraftschlusswerts der dritten bzw. vierten Vorzeichenfunktion als zweiten Wert eine "-1" annehmen.

Zweckmäßigerweise wird der Soll-Kraftschluss aus einem vom Fahrzeugführer oder einer übergeordneten Trajektorienplanung vorgegebenen Soll-Bremsweg ermittelt. Die Vorgabe des Soll-Kraftschlusses von einem Fahrzeugführer kann mittels eines entsprechenden Steuerelements, z.B. einem Hand- oder Fußhebel, oder die Eingabe eines entsprechenden Werts in ein Eingabegerät erfolgen.

Eine weitere zweckmäßige Ausgestaltung sieht vor, dass die Bremskraftänderung in Abhängigkeit der Werte der ersten bis vierten Vorzeichenfunktion mittels einer Lookup-Tabelle oder einen die Werte in vorgegebener Weise verarbeitenden Algorithmus oder einer Berechnungsvorschrift ermittelt wird. Dabei ist es zweckmäßig, wenn einzelne Werte der ersten bis vierten Vorzeichenfunktion oder daraus gebildete Terme mit einem variablen zustandsabhängigen Skalierungsfaktor beaufschlagt werden. Dies berücksichtigt den aktuellen Kraftschlusswert in Bezug auf seine Position auf der Kraftschluss-Schlupf-Kurve und ermöglicht größere oder kleinere oder gar keine Bremskraftänderungen für den nächsten Zeitschritt $k + 1$.

Die Erfindung schlägt ferner ein Computerprogrammprodukt vor, das direkt in den internen Speicher einer digitalen Steuereinheit geladen werden kann und Softwarecodeabschnitte umfasst, mit denen die Schritte gemäß einer oder mehrerer Ausführungsformen des erfindungsgemäßen Verfahrens ausgeführt werden, wenn das Produkt auf der Steuereinheit läuft.

Schließlich schlägt die Erfindung eine Vorrichtung zur computerimplementierten Regelung einer Bremsanlage eines Schienenfahrzeugs mit einem wie oben beschriebenen Regelkreis vor. Die Vorrichtung umfasst eine Recheneinheit zur Implementierung des Regelkreises und ist zur Durchführung einer oder mehrerer Ausführungsformen des erfindungsgemäßen Verfahrens ausgebildet. Die Vorrichtung weist die gleichen Vorteile auf, wie diese vorstehend in Verbindung mit dem erfindungsgemäßen Verfahren erläutert wurden.

Die Erfindung wird nachfolgend näher anhand eines Ausführungsbeispiels in der Zeichnung erläutert. Es zeigen:

Fig. 1     ein Diagramm, das den bekannten Zusammenhang zwischen Kraftschluss und Schlupf bei unterschiedlichen Rad-Schiene-Kontaktbedingungen illustriert;

Fig. 2     ein Diagramm, das den bekannten Zusammenhang zwischen Reibungskoeffizient und Zeit bei einer Vielzahl von Betriebsbremsungen illustriert, wobei stochastische Unterschiede der Betriebsbremsungen dargestellt sind;

Fig. 3     ein Diagramm, das für eine Kraftschluss-Schlupf-Kurve bei einer gegebenen Rad-Schiene-Kontaktbedingung unterschiedliche Zustände in Bezug auf einen optimalen Schlupf und beispielhaft zwei alternativ vorgegebene Soll-Kraftschlüsse illustriert; und

Fig. 4    ein Diagramm, das für eine Kraftschluss-Schlupf-Kurve bei einer gegebenen Rad-Schiene-Kontaktbedingung unterschiedliche Zustände in Bezug auf einen optimalen Schlupf und beispielhaft zwei alternativ vorgegebene Soll-Kraftschlussbereiche illustriert.

Beim vorgeschlagenen Verfahren zur Regelung einer Bremsanlage eines Schienenfahrzeugs wird eine ganzheitliche, durchgängige Bremsregelung realisiert, welche keine vorherige Festlegung eines oder mehrerer Umschaltpunkte zwischen einer Notbremsregelung und einer Betriebsbremsregelung benötigt. Das Verfahren kommt insbesondere bei elektrodynamischen oder elektropneumatischen Bremsanlagen zum Einsatz, welche eine schnelle und genaue Einstellung der Bremskraft bzw. des Bremsdrucks erlauben. Solche Bremsanlagen sind beispielsweise in Straßenbahnen verbreitet, da die zulässige Bremsverzögerung und somit der maximal betrieblich erlaubte Kraftschluss höher ist im Vergleich zum sog. Vollbahnbereich. Das Verfahren eignet sich auch deshalb besonders für Straßenbahnen, da aufgrund von geringen Haltestellenabständen viele Bremsmanöver auftreten.

Das Verfahren berechnet allgemein aus einem Soll-Kraftschluss $f_{soll,k}$ zwischen Rad und Schiene zu einem zeitdiskreten Zeitschritt $k$ eine zeitdiskrete Sollbremsgröße $M_{k+1}$ zu einem zeitdiskreten Zeitschritt $k + 1$. Die zeitdiskrete Soll-Bremsgröße $M_{k+1}$ zum zeitdiskreten Zeitschritt $k + 1$ berechnet sich somit gemäß

$$M_{k+1} = M_k + \Delta M_k \qquad (1)$$

In Gleichung (1) sind $M_k$ die aktuelle Bremsgröße und $\Delta M_k$ eine Bremskraftänderung, die mit dem nachfolgend beschriebenen Verfahren ermittelt wird.

Der Soll-Kraftschluss $f_{soll,k}$ zum Zeitschritt $k$ (nachfolgend kurz ohne den Index $k$: $f_{soll}$) wird beispielsweise von einem Fahrzeugführer vorgegeben oder einer übergeordneten Trajektorienplanung aus einem vorgegebenen Soll-Bremsweg berechnet.

Die Berechnung der zeitdiskreten Sollbremsgröße $M_{k+1}$ zum Zeitschritt $k + 1$ ergibt sich aus der Bremskraftänderung $\Delta M_k$ und nutzt Informationen zum aktuell ausgenutzten Kraftschluss $f_{ist,k}$ und dessen zeitlicher Ableitung $\dot{f}_{ist,k}$ sowie der zeitlichen Ableitung des aktuellen Schlupfs $\dot{s}_k$. Die Bremskraftänderung $\Delta M_k$ berechnet sich gemäß:

$$\Delta M_k = a \cdot \left[ sgn(\dot{f}_{ist,k} \cdot \dot{s}_k) + sgn(f_{soll} - f_{ist,k}) \right] - b \qquad (2)$$

Mit anderen Worten wird zu jedem Zeitschritt $k$ von einem oder mehreren Zeitschritten während des Betriebs des Schienenfahrzeugs aus dem angeforderten Soll-Kraftschluss $f_{soll}$, dem aktuell ausgenutzten Ist-Kraftschluss $f_{ist,k}$ und dessen Ableitung $\dot{f}_{ist,k}$ und der Ableitung des aktuellen Schlupfs $\dot{s}_k$ eine Bremskraftänderung $\Delta M_k$ ermittelt, welche der aktuellen Bremsgröße $M_k$ überlagert wird. In Gleichung (2) ist angegeben, wie sich die Bremskraftänderung $\Delta M_k$ aus den oben genannten Größen errechnet, wobei hierzu Vorzeichenfunktionen (sgn()) verwendet werden.

In Gleichung (2) repräsentiert die Vorzeichenfunktion $sgn(\dot{f}_{ist,k} \cdot \dot{s}_k)$ eine erste Vorzeichenfunktion, mit der ermittelt wird, ob der Schlupf $s_k$ zum aktuellen Zeitschritt $k$ größer oder kleiner als ein optimaler Schlupf $s_{opt}$ ist. Ist der aktuelle Schlupf $s_k$ zum aktuellen Zeitschritt $k$ kleiner als der optimale Schlupf $s_{opt}$, so nimmt die erste Vorzeichenfunktion einen ersten Wert ("1") an. Hier liegen stabile Schlupfbedingungen vor, die nachfolgend als "stabiler Mikroschlupf" bezeichnet werden. In diesem Schlupfbereich wird eine Erhöhung des Schlupfwerts angestrebt, idealerweise der optimale Schlupf $s_{opt}$. Im anderen Fall nimmt die erste Vorzeichenfunktion einen zweiten Wert ("-1") an. Hier liegen instabile Schlupfbedingungen vor, die nachfolgend als "instabiler Makroschlupf" bezeichnet werden. In diesem Schlupfbereich wird eine Reduktion des Schlupfwerts angestrebt. Es wird somit im Ergebnis ein Schlupf angestrebt, der gleich dem optimalen Schlupf $s_{opt}$ ist.

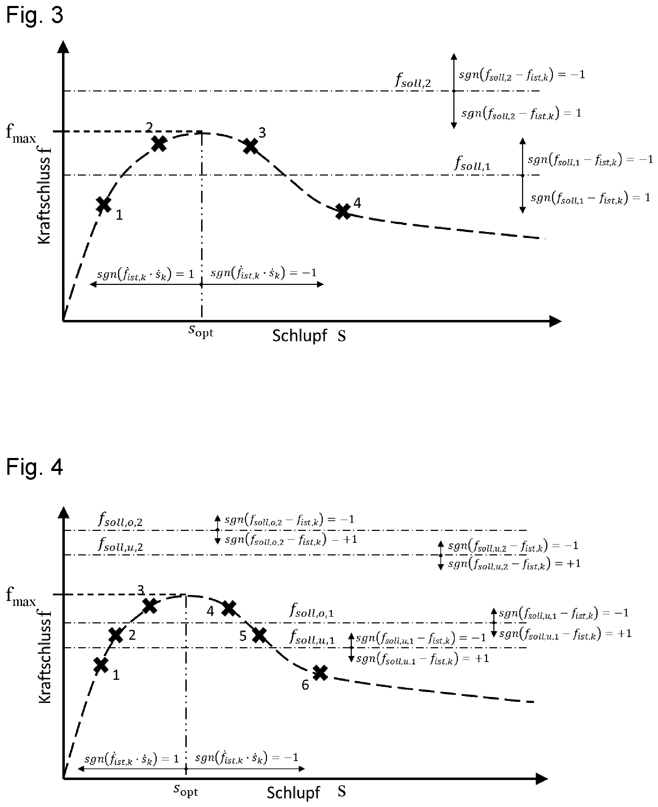

Dies kann den Diagrammen in den Fig. 3 und 4, die eine beispielhafte Kraftschluss-Schlupf-Kurve bei einer gegebenen Rad-Schiene-Kontaktbedingung zeigen, entnommen werden. In diesen Diagrammen sind die Vorzeichenfunktionen mit ihren jeweiligen Ergebniswerten zur Veranschaulichung eingezeichnet. Mit anderen Worten wird mit Hilfe der ersten Vorzeichenfunktion überprüft, in welchem Bereich der Kraftschluss-Schlupf-Kurve ein aktuell ermittelter Kraftschluss f sich in Bezug auf den optimalen Schlupf $s_{opt}$ befindet.

In Gleichung 2 repräsentiert die Vorzeichenfunktion $sgn(f_{soll} - f_{ist,k})$ eine zweite Vorzeichenfunktion, mit deren Hilfe ermittelt wird, ob der aktuell ausgenutzte Ist-Kraftschluss $f_{ist,k}$ größer oder kleiner als der angeforderte Soll-Kraftschluss $f_{soll}$ ist. Ist der aktuell ausgenutzte Ist-Kraftschluss $f_{ist,k}$ zum aktuellen Zeitschritt $k$ kleiner als der angeforderte Soll-Kraftschluss $f_{soll}$, so nimmt die zweite Vorzeichenfunktion einen ersten Wert ("1") an. Im anderen Fall nimmt die zweite Vorzeichenfunktion einen zweiten Wert ("-1") an. Der Kraftschluss soll nach Möglichkeit dem angeforderten Soll-Kraftschluss $f_{soll}$ entsprechen.

Im Ausführungsbeispiel der Fig. 3 sind beispielhaft zwei unterschiedliche Soll-Kraftschlüsse $f_{soll,1}$ und $f_{soll,2}$ angegeben. Es ist anzumerken, dass in einer jeweiligen Betriebssituation des Schienenfahrzeugs nur ein einziger Soll-Kraftschluss vorgegeben sein kann und die in Fig. 3 dargestellten zwei Soll-Kraftschlüsse $f_{soll,1}$ (nachfolgend erster Soll-Kraftschluss und gekennzeichnet durch den Index "soll,1") und $f_{soll,2}$ (nachfolgend zweiter Soll-Kraftschluss und gekennzeichnet durch den Index "soll,2") lediglich zur Erläuterung unterschiedlicher Situationen dienen.

Nachfolgend wird zunächst auf den ersten Soll-Kraftschluss $f_{soll,1}$ eingegangen. Wie aus Fig. 3 ohne Weiteres zu erkennen ist, ist der vom Fahrzeugführer oder einer Trajektorienplanung vorgegebene erste Soll-Kraftschluss $f_{soll,1}$ kleiner als ein (nicht bekannter) maximaler Kraftschluss $f_{max}$.

Durch die erste und die zweite Vorzeichenfunktion kann überprüft werden, inwieweit ein aktuell ausgenutzter Ist-Kraftschluss in Relation zum optimalen Schlupf $s_{opt}$ und zum angeforderten Soll-Kraftschluss $f_{soll}$ auf der Kraftschluss-Schlupf-Kurve liegt. Hieraus ergeben sich die in Fig. 3 gezeigten und mit einem Kreuz gekennzeichneten vier Zustände 1, 2, 3, 4, welche mit Hilfe der ersten und zweiten Vorzeichenfunktion aus Gleichung (2) definiert sind.

Die in Gleichung (2) angegebenen Parameter a und b dienen der Skalierung, um für den Zeitschritt $k + 1$ die optimale Bremskraftänderung $\Delta M_k$ ermitteln zu können. Dabei gilt b > 0, $a > \frac{1}{2}b$. Durch die Skalierung der Parameter a, b kann die Änderung $\Delta M_k$ der Soll-Bremsgröße $M_{k+1}$ an das tatsächliche System angepasst werden. Beispielsweise können diese Parameter gewählt werden zu a = 1,5 und b = 1. Die Parameter können durch Versuche oder Simulationen ermittelt werden.

Der Zustand 1 liegt im stabilen Mikroschlupfbereich, wobei der erste Soll-Kraftschluss $f_{soll,1}$ noch nicht erreicht ist. Dies bedeutet, dass die Bremskraftänderung $\Delta M_k$ größer Null gewählt werden muss, d.h. $\Delta M_k > 0$, indem die Sollbremsgröße $M_{k+1}$, der Schlupf $s_{k+1}$ und der Kraftschluss $f_{ist,k+1}$ steigen.

Der Zustand 2 liegt im stabilen Mikroschlupfbereich, wobei der erste Soll-Kraftschluss $f_{soll,1}$ überschritten ist. Infolgedessen muss die Bremskraftänderung $\Delta M_k$ kleiner als Null sein, d.h. $\Delta M_k < 0$, wodurch die Sollbremsgröße $M_{k+1}$, der Schlupf $s_{k+1}$ und der Kraftschluss $f_{ist,k+1}$ sinken.

Der Zustand 3 liegt im instabilen Makroschlupfbereich, wobei der erste Soll-Kraftschluss $f_{soll,1}$ überschritten ist. Infolgedessen muss die Bremskraftänderung $\Delta M_k$ geringer werden, d.h. $\Delta M_k < 0$, wodurch die Sollbremsgröße $M_{k+1}$ und der Schlupf $s_{k+1}$ sinken und der Kraftschluss $f_{ist,k+1}$ steigt.

Der Zustand 4 liegt im instabilen Makroschlupfbereich, bei dem der erste Soll- Kraftschluss $f_{soll,1}$ unterschritten ist. Infolgedessen muss die Bremskraftänderung $\Delta M_k$ geringer werden, d.h. $\Delta M_k < 0$, wodurch die Sollbremsgröße $M_{k+1}$ und der Schlupf $s_{k+1}$ sinken und der Kraftschluss $f_{ist,k+1}$ steigt.

Würde durch den Fahrzeugführer oder eine übergeordnete Trajektorienplanung als Soll-Kraftschluss der zweite Soll-Kraftschluss $f_{soll,2}$ gewählt werden, so würden lediglich zwei Zustände, nämlich Zustand 1=2 (stabiler Mikroschlupfbereich und zweiter Soll-Kraftschluss $f_{soll,2}$ nicht erreicht) und Zustand 3=4 (instabiler Makroschlupfbereich und zweiter Soll-Kraftschluss $f_{soll,2}$ unterschritten) auftreten.

Für die beiden Fälle ergeben sich für die Bremskraftänderung $\Delta M_k$ die oben genannten Parameterwerte a, b und die zustandsabhängigen Werte der ersten und zweiten Vorzeichenfunktion die dargestellten Werte:

| Zustand | $f_{soll,1}$ | $f_{soll,2}$ |
|---|---|---|
| 1 | $\Delta M_k = 1,5 \cdot [+1 + 1] - 1 = +2$ | $\Delta M_k = 1,5 \cdot [+1 + 1] - 1 = +2$ |
| 2 | $\Delta M_k = 1,5 \cdot [+1 - 1] - 1 = -1$ | $\Delta M_k = 1,5 \cdot [+1 + 1] - 1 = +2$ |
| 3 | $\Delta M_k = 1,5 \cdot [-1 - 1] - 1 = -4$ | $\Delta M_k = 1,5 \cdot [-1 + 1] - 1 = -1$ |
| 4 | $\Delta M_k = 1,5 \cdot [-1 + 1] -1 = -1$ | $\Delta M_k = 1,5 \cdot [-1 + 1] -1 = -1$ |

In Zustand 1 muss bei beiden Soll-Kraftschlussvorgaben $f_{soll,1}$, $f_{soll,2}$ die Bremskraftänderung $\Delta M_k$, entsprechend den oben gemachten Erläuterungen ansteigen. Gleiches gilt für Zustand 2 in Bezug auf den zweiten Soll-Kraftschluss $f_{soll,2}$, da der zweite Soll-Kraftschluss $f_{soll,2}$ nicht erreicht ist, und auch nicht erreicht werden kann, da $f_{soll,2}$ größer als der maximale Kraftschluss $f_{max}$ für die dargestellte Kraftschluss-Schlupf-Kurve bei einer gegebenen Rad-Schiene-Kontaktbedingung ist.

Eine erweiterte Variante dieser holistischen Bremsregelung berücksichtigt statt eines einzelnen Soll-Kraftschlusswertes $f_{soll}$ einen Bereich für den Soll-Kraftschluss mit einer unteren Begrenzung als unteren Kraftschlusswert $f_{soll,u}$ und einer oberen Begrenzung als oberen Kraftschlusswert $f_{soll,o}$. Dadurch wird ein Oszillieren um den Soll-Kraftschluss vermieden und der Bremsaktuator geschont. In dieser Situation errechnet sich die Bremskraftänderung $\Delta M_k$ gemäß folgender Gleichung

$$\Delta M_k = a \cdot \left[ sgn\left( \dot{f}_{ist,k} \cdot \dot{s}_k \right) + c \cdot sgn\left( f_{soll,u} - f_{ist,k} \right) + c \cdot sgn\left( f_{soll,o} - f_{ist,k} \right) \right] - b$$

$$(3)$$

Zur Veranschaulichung dient das Diagramm in Fig. 4, das wiederum eine Kraftschluss-Schlupf-Kurve bei einer gegebenen Rad-Schiene-Kontaktbedingung und beispielhaft zwei alternativ vorgegebenen Soll-Kraftschlussbereichen illustriert.

In Gleichung (3) kommen dabei die bereits erläuterte erste Vorzeichenfunktion sowie eine dritte Vorzeichenfunktion, welche die Differenz aus dem aktuell ausgenutzten Ist-Kraftschluss $f_{ist,k}$ und dem unteren Kraftschlusswert $f_{soll,u}$ berücksichtigt, sowie eine vierte Vorzeichenfunktion, welche die Differenz aus aktuell ausgenutztem Ist-Kraftschluss $f_{ist,k}$ und oberem Kraftschlusswert $f_{soll,o}$ ausnutzt, zur Anwendung. Definitionsgemäß sollen die dritte und vierte Vorzeichenfunktion einen ersten Wert ("1") annehmen, wenn der aktuell ausgenutzte Ist-Kraftschluss $f_{ist,k}$ größer als der untere Kraftschlusswert $f_{soll,u}$ bzw. der obere Kraftschlusswert $f_{soll,o}$ ist. Andernfalls nehmen die dritte und die vierte Vorzeichenfunktion einen zweiten Wert ("-1") an. Mit der dritten und vierten Vorzeichenfunktion wird jeweils berücksichtigt, wo der aktuell ausgenutzte Ist-Kraftschluss $f_{ist,k}$ in Bezug auf die jeweiligen Kraftschluss-Grenzen ist.

In Gleichung (3) werden drei Parameter a, b und c zur Gewichtung einzelner Werte der Vorzeichenfunktionen (Parameter c) bzw. Terme der Vorzeichenfunktionen (Parameter a) verarbeitet. Beispielhaft werden die Parameter angenommen zu a = b = c = 0,5. Die Parameter können durch Versuche oder Simulationen ermittelt werden.

Hieraus ergeben sich, wie dies Fig. 4 zeigt, sechs verschiedene, mit Kreuzen dargestellte, Zustände 1, 2, 3, 4, 5, 6. Die Zustände 1, 2, 3 liegen im stabilen Mikroschlupfbereich, d.h. der beim aktuell ausgenutzten Kraftschluss $f_{ist,k}$ vorliegende Schlupf $s_k$ ist kleiner als der optimale Schlupf $s_{opt}$. Die Zustände 4, 5, 6 liegen im instabilen Makroschlupfbereich, d.h. beim aktuell ausgenutzten Ist-Kraftschluss $f_{ist,k}$ ist der Schlupf $s_k$ größer als der optimale Schlupf $s_{opt}$.

Im Ausführungsbeispiel der Fig. 4 sind wieder beispielhaft zwei unterschiedliche Soll-Kraftschlussbereiche dargestellt, deren jeweilige obere und untere Grenzen mit strichpunktierten Linien markiert sind. Es ist anzumerken, dass in einer jeweiligen Betriebssituation des Schienenfahrzeugs nur ein einziger Soll-Kraftschlussbereich vorgegeben sein kann. Die beiden Kraftschlussbereiche dienen wieder lediglich der Erläuterung unterschiedlicher Situationen. Die oberen und unteren Kraftschluss-Grenzen sind mit den Indizes ("soll,o,1" und "soll,u,1" für den ersten Soll-Kraftschlussbereich und "soll,o,2" und "soll,u,2" für den zweiten Soll-Kraftschlussbereich) gekennzeichnet.

Wie ohne Weiteres zu erkennen ist, ist in Bezug auf den ersten Soll-Kraftschlussbereich eine Situation gegeben, in der die Zustände 2 und 5 innerhalb des ersten Soll-Kraftschlussbereiches liegen, während die Zustände 1 und 6 unter dem unteren Kraftschlusswert $f_{soll,u,1}$ und die Zustände 3 und 4 über dem oberen Kraftschlusswert $f_{soll,o,1}$ liegen. Hieraus folgt, dass in Zustand 1 die Bremskraftänderung erhöht werden muss ($\Delta M_k > 0$), in Zustand 2 konstant bleiben kann ($\Delta M_k = 0$) und in den restlichen Zuständen 3 bis 6 verringert werden muss ($\Delta M_k < 0$), um wieder zurück in den stabilen Mikroschlupf und den gewünschten Kraftschlussbereich (d.h. Zustand 2) zu gelangen.

Der zweite Soll-Kraftschlussbereich in Fig. 4 liegt oberhalb des maximal erreichbaren Kraftschlusses $f_{max}$. In diesem Fall muss die Bremskraftänderung $\Delta M_k$ in den Zuständen 1, 2 und 3 erhöht werden, während diese in den Zuständen 4, 5 und 6 verringert werden muss, um auf der Kraftschluss-Schlupf-Kurve in die Nähe des Kurvenmaximums (Wertepaar aus $f_{max}$ und $s_{opt}$) zu gelangen.

Tabelle 2 gibt für die in Fig. 4 gezeigten Zustände 1 bis 6 und die beiden Soll-Kraftschlussbereiche (Index 1 und Index 2) die jeweiligen Bremskraftänderungen an:

| Zustand | $f_{soll,1}$ | $f_{soll,2}$ |
|---|---|---|
| 1 | $\Delta M_k = 0,5 \cdot [+1 + 0,5 + 0,5] - 0,5 = +0,5$ | $\Delta M_k = 0,5 \cdot [+1 + 0,5 + 0,5] - 0,5 = +0,5$ |
| 2 | $\Delta M_k = 0,5 \cdot [+1 - 0,5 + 0,5] - 0,5 = \pm 0,0$ | $\Delta M_k = 0,5 \cdot [+1 + 0,5 + 0,5] - 0,5 = +0,5$ |
| 3 | $\Delta M_k = 0,5 \cdot [+1 - 0,5 - 0,5] - 0,5 = -0,5$ | $\Delta M_k = 0,5 \cdot [+1 + 0,5 + 0,5] - 0,5 = +0,5$ |
| 4 | $\Delta M_k = 0,5 \cdot [-1 - 0,5 - 0,5] - 0,5 = -1,5$ | $\Delta M_k = 0,5 \cdot [-1 + 0,5 + 0,5] - 0,5 = -0,5$ |
| 5 | $\Delta M_k = 0,5 \cdot [-1 - 0,5 + 0,5] - 0,5 = -1,0$ | $\Delta M_k = 0,5 \cdot [-1 + 0,5 + 0,5] - 0,5 = -0,5$ |
| 6 | $\Delta M_k = 0,5 \cdot [-1 + 0,5 + 0,5] - 0,5 = -0,5$ | $\Delta M_k = 0,5 \cdot [-1 + 0,5 + 0,5] - 0,5 = -0,5$ |

Abhängig davon, in welchem Zustand sich das Schienenfahrzeug aktuell befindet, wird im ersten Soll-Kraftschlussbereich eine größere oder kleinere negative Bremskraftänderung realisiert.

Neben der beschriebenen Nutzung der Berechnungsvorschrift(en) kann die Bremskraftänderung $\Delta M_k$ auch mit Hilfe einer Lookup-Tabelle ermittelt werden, in der für die verschiedenen Zustände die jeweiligen, um die Skalierungsparameter korrigierten Werte jeweiliger Vorzeichenfunktionen enthalten sind. Ebenso kann ein die Werte der Vorzeichenfunktionen in vorgegebener Weise verarbeitender Algorithmus genutzt werden.

Der beschriebene Lösungsansatz wurde in numerischen Simulationen getestet und einem System mit einem vorab festgelegten und unveränderlichen Sollschlupfbereich in zwei Testfällen gegenübergestellt. Es hat sich gezeigt, dass das Verfahren geeignet ist, um auf unterschiedliche äußere Bedingungen derart zu reagieren, dass ohne vorab definierte Schlupf-, Beschleunigungs- oder sonstige Grenzwerte eine durchgängige Regelung erfolgt, die unter schlechten Rad-Schiene-Kontaktbedingungen den Kraftschluss maximiert, um ungewollte Bremswegverlängerungen zu minimieren und die bei ausreichenden Rad-Schiene-Kontaktbedingungen den Kraftschluss konstant hält, um stochastische Einflüsse auf den Bremsweg zu reduzieren und die Wiederholbarkeit zu verbessern.

Referenzen

[1] MAYER, Reinhold; RASEL, Thomas: Höhere Zugtaktung: Neuartiger Gleitschutz für eine verbesserte Auslastung der Schieneninfrastruktur. In: ZEVrail 144 (2020), Nr. 11-12, S. 438-442
[2] Schwarz, Christoph; Posielek, Tobias; Goetjes, Björn: Adhesion-Based Maximum-Seeking Brake Control for Railway Vehicles. In: 27th IAVSD International Symposium on Dynamics of Vehicles on Roads and Tracks, Aug. 2021, St. Petersburg, Russia.
[3] Schwarz, Christoph; Model-Based Estimation of Wheel/Rail- and Brake Disc/Pad-Friction for Railway Vehicles, Dissertation, RWTH Aachen University, 2022

**Patentansprüche**

1. Verfahren zur computerimplementierten Regelung einer elektrodynamischen oder elektropneumatischen Bremsanlage eines Schienenfahrzeugs mit einem Regelkreis, wobei die Bremsanlage ein, zumindest einem Rad des Schienenfahrzeugs zugeordnetes, Stellglied umfasst, wobei der Regelkreis im Betrieb des Schienenfahrzeugs einen angeforderten Soll-Kraftschluss ($f_{soll}$) zu einem aktuellen Zeitschritt k zwischen dem Rad und einer Schiene, auf der sich das Schienenfahrzeug bewegt, verarbeitet und an einem Ausgang eine zeitdiskrete Soll-bremsgröße ($M_{k+1}$) zu einem darauf folgenden Zeitschritt k + 1 ausgibt, die der Bremsanlage als Eingangsgröße zugeführt wird,
bei dem zu jedem Zeitschritt k von einem oder mehreren Zeitschritten während des Betriebs des Schienenfahrzeugs aus dem angeforderten Soll-Kraftschluss ($f_{soll}$), einem aktuell ausgenutzten Ist-Kraftschluss ($f_{ist,k}$) und dessen Ableitung ($\dot{f}_{ist,k}$), und einer Ableitung eines aktuellen Schlupfs ($\dot{s}_k$) eine Bremskraftänderung ($\Delta M_k$) ermittelt wird, die der aktuellen Bremsgröße ($M_k$) überlagert wird.

2. Verfahren nach Anspruch 1, bei dem ermittelt wird, ob der Schlupf ($s_k$) zum aktuellen Zeitschritt k größer oder kleiner als ein dem optimalen Kraftschluss entsprechender optimaler Schlupf ($s_{opt}$) ist.

3. Verfahren nach Anspruch 2, bei dem ein Wert einer ersten Vorzeichenfunktion des Produkts aus der zeitlichen Ableitung ($\dot{f}_{ist,k}$) des aktuell ausgenutzten Ist-Kraftschlusses ($f_{ist,k}$) und der zeitlichen Ableitung des aktuellen Schlupfs ($\dot{s}_k$) ermittelt wird, wobei ein erster Wert der ersten Vorzeichenfunktion verarbeitet wird, wenn der Schlupf ($s_k$) zum aktuellen Zeitschritt k kleiner als der optimale Schlupf ($s_{opt}$) ist, und wobei ein zweiter Wert der ersten Vorzeichenfunktion verarbeitet wird, wenn der Schlupf ($s_k$) zum aktuellen Zeitschritt k größer als der optimale Schlupf ($s_{opt}$) ist.

4. Verfahren nach einem der vorhergehenden Ansprüche, bei dem ermittelt wird, ob der aktuell ausgenutzte Ist-Kraftschluss ($f_{ist,k}$) zum aktuellen Zeitschritt k größer oder kleiner als der angeforderte Soll-Kraftschluss ($f_{soll}$) ist.

5. Verfahren nach Anspruch 4, bei dem ein Wert einer zweiten Vorzeichenfunktion aus der Differenz des angeforderten Soll-Kraftschlusses ($f_{soll}$) und dem aktuell ausgenutzten Ist-Kraftschluss ($f_{ist,k}$) zum aktuellen Zeitschritt k ermittelt wird, wobei ein erster Wert der zweiten Vorzeichenfunktion verarbeitet wird, wenn der aktuell ausgenutzte Ist-Kraftschluss ($f_{ist,k}$) zum aktuellen Zeitschritt k kleiner als der angeforderte Soll-Kraftschluss ($f_{soll}$) ist, und wobei ein zweiter Wert der zweiten Vorzeichenfunktion verarbeitet wird, wenn der aktuell ausgenutzte Ist-Kraftschluss ($f_{ist,k}$) zum aktuellen Zeitschritt k größer als der angeforderte Soll-Kraftschluss ($f_{soll}$) ist.

6. Verfahren nach einem der vorhergehenden Ansprüche, bei dem der Soll-Kraftschluss ($f_{soll}$) in einem vorgegebenen Bereich mit einem unteren Kraftschlusswert ($f_{soll,u}$) und einem oberen Kraftschlusswert ($f_{soll,o}$) liegt.

7. Verfahren nach Anspruch 6 in Kombination mit einem der Ansprüche 4 oder 5, bei dem ermittelt wird, ob der aktuell ausgenutzte Ist-Kraftschluss ($f_{ist,k}$) zum aktuellen Zeitschritt k größer oder kleiner als der untere Kraftschlusswert ($f_{soll,u}$) und größer oder kleiner als der obere Kraftschlusswert ($f_{soll,o}$) ist.

8. Verfahren nach Anspruch 7, bei dem ein Wert einer dritten Vorzeichenfunktion aus der Differenz des oberen Kraftschlusswerts ($f_{soll,o}$) und dem aktuell ausgenutzten Ist-Kraftschluss ($f_{ist,k}$) zum aktuellen Zeitschritt k ermittelt wird, wobei ein erster Wert der dritten Vorzeichenfunktion verarbeitet wird, wenn der aktuell ausgenutzte Ist-Kraftschluss ($f_{ist,k}$) zum aktuellen Zeitschritt k kleiner als der obere Kraftschlusswert ($f_{soll,o}$) ist, und wobei ein zweiter Wert der dritten Vorzeichenfunktion verarbeitet wird, wenn der aktuell ausgenutzte Ist-Kraftschluss ($f_{ist,k}$) zum aktuellen Zeitschritt k größer als der obere Kraftschlusswert ($f_{soll,o}$) ist.

9. Verfahren nach Anspruch 8, bei dem ein Wert einer vierten Vorzeichenfunktion aus der Differenz des unteren Kraftschlusswerts ($f_{soll,u}$) und dem aktuell ausgenutzten Ist-Kraftschluss ($f_{ist,k}$) zum aktuellen Zeitschritt k ermittelt wird, wobei ein erster Wert der vierten Vorzeichenfunktion verarbeitet wird, wenn der aktuell ausgenutzte Ist-Kraftschluss ($f_{ist,k}$) zum aktuellen Zeitschritt k kleiner als der untere Kraftschlusswert ($f_{soll,u}$) ist, und wobei ein zweiter Wert der vierten Vorzeichenfunktion verarbeitet wird, wenn der aktuell ausgenutzte Ist-Kraftschluss ($f_{ist,k}$) zum aktuellen Zeitschritt k größer als der untere Kraftschlusswert ($f_{soll,u}$) ist.

10. Verfahren nach einem der vorhergehenden Ansprüche, bei dem der Soll-Kraftschluss ($f_{soll}$) aus einem vom Fahrzeugführer oder einer übergeordneten Trajektorienplanung vorgegebenem Soll-Bremsweg ermittelt wird.

11. Verfahren nach Anspruch 9, bei dem die Bremskraftänderung ($\Delta M_k$) in Abhängigkeit der Werte der ersten bis vierten Vorzeichenfunktion mittels einer Lookup-Tabelle oder eines die Werte in vorgegebener Weise verarbeitenden Algorithmus oder einer Berechnungsvorschrift ermittelt wird.

12. Verfahren nach Anspruch 11, bei dem einzelne der Werte der ersten bis vierten Vorzeichenfunktion oder daraus gebildete Terme mit einem variablen zustandsabhängigen Skalierungsfaktor beaufschlagt werden.

13. Computerprogrammprodukt, das direkt in den internen Speicher einer digitalen Steuereinheit geladen werden kann und Softwarecodeabschnitte umfasst, mit denen die Schritte gemäß einem der vorhergehenden Ansprüche ausgeführt werden, wenn das Produkt auf der Steuereinheit läuft.

14. Vorrichtung zur computerimplementierten Regelung einer elektrodynamischen oder elektropneumatischen Bremsanlage eines Schienenfahrzeugs, die ein, zumindest einem Rad des Schienenfahrzeugs zugeordnetes, Stellglied umfasst, mit einem Regelkreis, wobei die Vorrichtung eine Recheneinheit zur Implementierung des Regelkreises umfasst, die dazu ausgebildet ist, im Betrieb des Schienenfahrzeugs einen angeforderten Soll-Kraftschluss ($f_{soll}$) zu einem aktuellen Zeitschritt k zwischen dem Rad und einer Schiene, auf der sich das Schienenfahrzeug bewegt, zu verarbeiten und an einem Ausgang eine zeitdiskrete Soll-bremsgröße ($M_{k+1}$) zu einem darauf folgenden Zeitschritt k + 1 auszugeben, die der Bremsanlage als Eingangsgröße zugeführt werden,

> wobei die Recheneinheit ferner dazu ausgebildet ist,
> zu jedem Zeitschritt k von einem oder mehreren Zeitschritten während des Betriebs des Schienenfahrzeugs aus dem angeforderten Soll-Kraftschluss ($f_{soll}$), einem aktuell ausgenutzten Ist-Kraftschluss ($f_{ist,k}$) und dessen Ableitung ($\dot{f}_{ist,k}$), und einer Ableitung eines aktuellen Schlupfs ($\dot{s}_k$) eine Bremskraftänderung ($\Delta M_k$) zu ermitteln, die der aktuellen Bremsgröße ($M_k$) überlagert wird.

15. Vorrichtung nach Anspruch 14, **dadurch gekennzeichnet, dass** die Recheneinheit zur Durchführung der Schritte gemäß einem der Ansprüche 2 bis 12 ausgebildet ist.

**Claims**

1. A method for computer-implemented control of an electrodynamic or electropneumatic braking system of a rail vehicle with a control loop, wherein the braking system comprises an actuator associated with at least one wheel of the rail vehicle, wherein during operation of the rail vehicle the control loop processes a requested target frictional connection ($f_{soll}$) at a current time step k between the wheel and a rail on which the rail vehicle is moving, and outputs at an output a time-discrete target braking quantity ($M_{k+1}$) at a subsequent time step k + 1, which is fed to the braking system as an input quantity,
in which at each time step k of one or more time steps during the operation of the rail vehicle, based on the requested target frictional connection ($f_{soll}$), a currently utilized actual frictional connection ($f_{ist,k}$) and its derivative ($\dot{f}_{ist,k}$), and a derivative of a current slip ($\dot{s}_k$), a braking force change ($\Delta M_k$) is determined, which is superimposed on the current braking quantity ($M_k$).

2. The method according to claim 1, in which it is determined whether the slip ($s_k$) at the current time step k is greater or less than an optimal slip ($s_{opt}$) corresponding to the optimal frictional connection.

3. The method according to claim 2, in which a value of a first sign function of the product of the time derivative ($\dot{f}_{ist,k}$) of the currently utilized actual frictional connection ($f_{ist,k}$) and the time derivative of the current slip ($\dot{s}_k$) is determined, wherein a first value of the first sign function is processed when the slip ($s_k$) at the current time step k is smaller than the optimal slip ($s_{opt}$), and wherein a second value of the first sign function is processed when the slip ($s_k$) at the current time step k is greater than the optimal slip ($s_{opt}$).

4. The method according to one of the preceding claims, in which it is determined whether the currently utilized actual frictional connection ($f_{ist,k}$) at the current time step k is greater or less than the requested target frictional connection ($f_{soll}$).

5. The method according to claim 4, in which a value of a second sign function is determined from the difference between the requested target frictional connection ($f_{soll}$) and the currently utilized actual frictional connection ($f_{ist,k}$) at the current time step k, wherein a first value of the second sign function is processed when the currently utilized actual frictional connection ($f_{ist,k}$) at the current time step k is smaller than the requested target frictional connection ($f_{soll}$), and wherein a second value of the second sign function is processed when the currently utilized actual frictional connection ($f_{ist,k}$) at the current time step k is greater than the requested target frictional connection ($f_{soll}$).

6. The method according to one of the preceding claims, in which the target frictional connection ($f_{soll}$) lies in a predetermined range with a lower frictional connection value ($f_{soll,u}$) and an upper frictional connection value ($f_{soll,o}$).

7. The method according to claim 6 in combination with one of the claims 4 or 5, in which it is determined whether the currently utilized actual frictional connection ($f_{ist,k}$) at the current time step k is greater or less than the lower frictional connection value ($f_{soll,u}$) and greater or less than the upper frictional connection value ($f_{soll,o}$).

8. The method according to claim 7, in which a value of a third sign function is determined from the difference between the upper frictional connection value $f_{soll,o}$) and the currently utilized actual frictional connection ($f_{ist,k}$) at the current time step k, wherein a first value of the third sign function is processed when the currently utilized actual frictional connection ($f_{ist,k}$) at the current time step k is less than the upper frictional connection value $f_{soll,o}$), and wherein a second value of the third sign function is processed when the currently utilized actual frictional connection ($f_{ist,k}$) at the current time step k is greater than the upper frictional connection value $f_{soll,o}$).

9. The method according to claim 8, in which a value of a fourth sign function is determined from the difference between the lower frictional connection value ($f_{soll,u}$) and the currently utilized actual frictional connection ($f_{ist,k}$) at the current time step k, wherein a first value of the fourth sign function is processed when the currently utilized actual frictional connection ($f_{ist,k}$) at the current time step k is smaller than the lower frictional connection value ($f_{soll,u}$), and wherein a second value of the fourth sign function is processed when the currently utilized actual frictional connection ($f_{ist,k}$) at the current time step k is greater than the lower frictional connection value ($f_{soll,u}$).

10. The method according to one of the preceding claims, in which the target frictional connection ($f_{soll}$) is determined from a target braking distance specified by the vehicle driver or a higher-level trajectory planning.

11. The method according to claim 9, in which the change in braking force ($\Delta M_k$) is determined depending on the values of the first to fourth sign function by means of a lookup table or an algorithm processing the values in a predefined manner or a calculation rule.

12. The method according to claim 11, in which a variable state-dependent scaling factor is applied to individual ones of the values of the first to fourth sign functions or to terms formed therefrom.

13. A computer program product which can be loaded directly into the internal memory of a digital control unit and comprises sections of software code with which the steps according to one of the preceding claims are performed when the product is running on the control unit.

14. A device for computer-implemented control of an electrodynamic or electropneumatic braking system of a rail vehicle, which comprises an actuator associated with at least one wheel of the rail vehicle, with a control loop, wherein the device comprises a computing unit for implementing the control loop, which is designed to process, during operation of the rail vehicle, a requested target frictional connection ($f_{soll}$) at a current time step k between the wheel and a rail on which the rail vehicle is moving, and to output, at an output, a time-discrete target braking quantity ($M_{k+1}$) at a subsequent time step k + 1, which is supplied to the braking system as an input quantity,

wherein the computing unit is further designed to,
at each time step k of one or more time steps during operation of the rail vehicle, based on the requested target frictional connection ($f_{soll}$), a currently utilized actual frictional connection ($f_{ist,k}$) and its derivative ($\dot{f}_{ist,k}$), and a derivative of a current slip ($\dot{s}_k$), determine a change in braking force ($\Delta M_k$) which is superimposed on the current braking quantity ($M_k$).

**15.** The device according to claim 14, **characterized in that** the computing unit is designed to perform the steps according to one of claims 2 to 12.

**Revendications**

**1.** Procédé de régulation mise en œuvre par ordinateur d'un système de freinage électrodynamique ou électropneumatique d'un véhicule ferroviaire avec une boucle de régulation, où le système de freinage comprend un organe de réglage associé à au moins une roue du véhicule ferroviaire, où la boucle de régulation, pendant le fonctionnement du véhicule ferroviaire, traite une adhérence de consigne demandée ($f_{soll}$) à un incrément de temps actuel k entre la roue et un rail, sur lequel le véhicule ferroviaire se déplace, et délivre à une sortie une grandeur de freinage de consigne ($M_{k+1}$) discrète dans le temps pour un incrément de temps suivant k + 1, qui est transmise au système de freinage en tant que grandeur d'entrée,
dans lequel, pour chaque incrément de temps k parmi un ou plusieurs incréments de temps pendant le fonctionnement du véhicule ferroviaire, une variation de force de freinage ($\Delta M_k$) est déterminée à partir de l'adhérence de consigne demandée ($f_{soll}$), d'une adhérence réelle actuellement exploitée ($f_{ist,k}$) et de sa dérivée ($\dot{f}_{ist,k}$) et d'une dérivée d'un glissement actuel ($\dot{s}_k$), laquelle variation est superposée à la grandeur de freinage actuelle ($M_k$).

**2.** Procédé selon la revendication 1, dans lequel on détermine si le glissement ($s_k$) à l'incrément de temps actuel k est supérieur ou inférieur à un glissement optimal ($s_{opt}$) correspondant à l'adhérence optimale.

**3.** Procédé selon la revendication 2, dans lequel une valeur d'une première fonction signe du produit de la dérivée temporelle ($\dot{f}_{ist,k}$) de l'adhérence réelle actuellement exploitée ($f_{ist,k}$) et de la dérivée temporelle du glissement actuel ($s_k$) est déterminée, où une première valeur de la première fonction signe est traitée lorsque le glissement ($s_k$) à l'incrément de temps actuel k est inférieur au glissement optimal ($s_{opt}$), et où une deuxième valeur de la première fonction signe est traitée lorsque le glissement ($s_k$) à l'incrément de temps actuel k est supérieur au glissement optimal ($s_{opt}$).

**4.** Procédé selon l'une des revendications précédentes, dans lequel on détermine si l'adhérence réelle actuellement exploitée ($f_{ist,k}$) à l'incrément de temps actuel k est supérieure ou inférieure à l'adhérence de consigne demandée ($f_{soll}$).

**5.** Procédé selon la revendication 4, dans lequel une valeur d'une deuxième fonction signe est déterminée à partir de la différence entre l'adhérence de consigne demandée ($f_{soll}$) et l'adhérence réelle actuellement exploitée ($f_{ist,k}$) à l'incrément de temps actuel k, où une première valeur de la deuxième fonction signe est traitée lorsque l'adhérence réelle actuellement exploitée ($f_{ist,k}$) à l'incrément de temps actuel k est inférieure à l'adhérence de consigne demandée ($f_{soll}$), et où une deuxième valeur de la deuxième fonction signe est traitée lorsque l'adhérence réelle actuellement utilisée ($f_{ist,k}$) à l'incrément de temps actuel k est supérieure à l'adhérence de consigne demandée ($f_{soll}$).

**6.** Procédé selon l'une des revendications précédentes, dans lequel l'adhérence de consigne ($f_{soll}$) est comprise dans une plage prédéterminée avec une valeur d'adhérence inférieure ($f_{soll,u}$) et une valeur d'adhérence supérieure ($f_{soll,o}$).

**7.** Procédé selon la revendication 6, en combinaison avec l'une des revendications 4 ou 5, dans lequel on détermine si l'adhérence réelle actuellement exploitée ($f_{ist,k}$) à l'incrément de temps actuel k est supérieure ou inférieure à la valeur d'adhérence inférieure ($f_{soll,u}$) et supérieure ou inférieure à la valeur d'adhérence supérieure ($f_{soll,o}$).

**8.** Procédé selon la revendication 7, dans lequel une valeur d'une troisième fonction signe est déterminée à partir de la différence entre la valeur d'adhérence supérieure ($f_{soll,o}$) et l'adhérence réelle actuellement exploitée ($f_{ist,k}$) à l'incrément de temps actuel k, où une première valeur de la troisième fonction signe est traitée, lorsque l'adhérence réelle actuellement exploitée ($f_{ist,k}$) à l'incrément de temps actuel k est inférieure à la valeur d'adhérence supérieure ($f_{soll,o}$), et où une deuxième valeur de la troisième fonction de signe est traitée lorsque l'adhérence réelle actuellement exploitée ($f_{ist,k}$) à l'incrément de temps actuel k est supérieure à la valeur d'adhérence supérieure ($f_{soll,o}$).

9. Procédé selon la revendication 8, dans lequel une valeur d'une quatrième fonction signe est déterminée à partir de la différence entre la valeur d'adhérence inférieure ($f_{soll,u}$) et l'adhérence réelle actuellement exploitée ($f_{ist,k}$) à l'incrément de temps actuel k, où une première valeur de la quatrième fonction signe est traitée lorsque l'adhérence réelle actuellement exploitée ($f_{ist,k}$) à l'incrément de temps actuel k est inférieure à la valeur d'adhérence inférieure ($f_{soll,u}$), et où une deuxième valeur de la quatrième fonction signe est traitée lorsque l'adhérence réelle actuellement exploitée ($f_{ist,k}$) à l'incrément de temps actuel k est supérieure à la valeur d'adhérence inférieure ($f_{soll,u}$).

10. Procédé selon l'une des revendications précédentes, dans lequel l'adhérence de consigne ($f_{soll}$) est déterminée à partir d'une distance de freinage de consigne prescrite par le conducteur du véhicule ou par une planification de trajectoire de niveau supérieur.

11. Procédé selon la revendication 9, dans lequel la variation de force de freinage ($\Delta M_k$) est déterminée de manière dépendante des valeurs des première à quatrième fonctions signe au moyen d'une table de consultation ou d'un algorithme traitant les valeurs de manière prédéterminée ou d'une règle de calcul.

12. Procédé selon la revendication 11, dans lequel des valeurs individuelles parmi les valeurs des première à quatrième fonctions signe ou des termes formés à partir de celles-ci sont soumis à un facteur d'échelle variable en fonction de l'état.

13. Produit de programme informatique qui peut être chargé directement dans la mémoire interne d'une unité de commande numérique et qui comprend des sections de code logiciel avec lesquelles les étapes selon l'une des revendications précédentes sont exécutées lorsque le produit est exécuté sur l'unité de commande.

14. Dispositif de régulation implémentée par ordinateur d'un système de freinage électrodynamique ou électropneumatique d'un véhicule ferroviaire qui comprend un organe de réglage associé à au moins une roue du véhicule ferroviaire, avec une boucle de régulation, où le dispositif comprend une unité de calcul pour l'implémentation de la boucle de régulation, qui est conçue pour traiter, pendant le fonctionnement du véhicule ferroviaire, une adhérence de consigne demandée ($f_{soll}$) à un incrément de temps actuel k entre la roue et un rail sur lequel se déplace le véhicule ferroviaire, et pour délivrer à une sortie une grandeur de freinage de consigne ($M_{k+1}$) discrète dans le temps à un incrément de temps suivant k + 1, qui est fournie au système de freinage comme grandeur d'entrée,

où l'unité de calcul est en outre conçue pour,
à chaque incrément de temps k parmi un ou plusieurs incréments de temps pendant le fonctionnement du véhicule ferroviaire, déterminer, à partir de l'adhérence de consigne demandée ($f_{soll}$), d'une adhérence réelle actuellement exploitée ($f_{ist,k}$) et de sa dérivée ($\dot{f}_{ist,k}$), et d'une dérivée d'un glissement actuel ($\dot{s}_k$), une variation de force de freinage ($\Delta M_k$) qui est superposée à la grandeur de freinage actuelle ($M_k$).

15. Dispositif selon la revendication 14, **caractérisé en ce que** l'unité de calcul est conçue pour l'exécution des étapes selon l'une des revendications 2 à 12.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DE 102015116862 A1
- DE 102016005248 A1
- DE 102019212179 A1
- DE 102019108447 A1
- US 2014343769 A1

**In der Beschreibung aufgeführte Nicht-Patentliteratur**

- **MAYER, REINHOLD** ; **RASEL, THOMAS**. Höhere Zugtaktung: Neuartiger Gleitschutz für eine verbesserte Auslastung der Schieneninfrastruktur. *ZEVrail*, 2020, vol. 144 (11-12), 438-442
- **SCHWARZ, CHRISTOPH** ; **POSIELEK, TOBIAS** ; **GOETJES, BJÖRN**. Adhesion-Based Maximum-Seeking Brake Control for Railway Vehicles. *27th IAVSD International Symposium on Dynamics of Vehicles on Roads and Tracks*, August 2021
- **SCHWARZ, CHRISTOPH**. Model-Based Estimation of Wheel/Rail- and Brake Disc/Pad-Friction for Railway Vehicles, Dissertation. RWTH Aachen University, 2022